# EUROPÄISCHE PATENTSCHRIFT

(11) **EP 2 954 249 B1**
(45) Veröffentlichungstag und Bekanntmachung des Hinweises auf die Patenterteilung: **23.05.2018**
(21) Anmeldenummer: 14703538.0
(22) Anmeldetag: 06.02.2014
(51) Int. Cl.: F17C 1/06, F17C 1/16

(54) **VORRICHTUNG ZUR SPEICHERUNG UND ABGABE VON FLÜSSIGEN UND/ODER GASFÖRMIGEN MEDIEN UNTER DRUCK SOWIE KRAFTSTOFFENERGIEUMWANDLUNGSVORRICHTUNG UND VERFAHREN ZUR MONTAGE EINER VORRICHTUNG ZUR SPEICHERUNG UND ABGABE VON FLÜSSIGEN UND/ODER GASFÖMIGEN MEDIEN UNTER DRUCK**
DEVICE FOR THE STORAGE AND DELIVERY OF LIQUID AND/OR GASEOUS MEDIA UNDER PRESSURE AND FUEL-ENERGY CONVERSION DEVICE AND METHOD FOR FITTING A DEVICE FOR THE STORAGE AND DELIVERY OF LIQUID AND/OR GASEOUS MEDIA UNDER PRESSURE
DISPOSITIF DE STOCKAGE ET DE DISTRIBUTION DE FLUIDES LIQUIDES ET/OU GAZEUX SOUS PRESSION ET DISPOSITIF DE CONVERSION DE L'ÉNERGIE D'UN CARBURANT, ET PROCÉDÉ DE MONTAGE D'UN DISPOSITIF DE STOCKAGE ET DE DISTRIBUTION DE FLUIDES LIQUIDES ET/OU GAZEUX SOUS PRESSION

(30) Priorität: 08.02.2013 DE 202013100594 U; 13.02.2013 DE 102013101425
(43) Veröffentlichungstag der Anmeldung: 16.12.2015
(73) Patentinhaber: REHAU AG + Co, 95111 Rehau (DE)
(72) Erfinder: LANZL, Thomas, 95615 Marktredwitz (DE); HOFMANN, Franz, 95213 Münchberg (DE)
(86) Internationale Anmeldenummer: PCT/EP2014/000324
(87) Internationale Veröffentlichungsnummer: WO 2014/121935

(56) Entgegenhaltungen:
- WO-A1-2013/020668
- DE-A1- 2 152 123
- DE-C1- 19 631 546
- JP-A- 2001 050 494
- US-A1- 2007 012 551
- US-A1- 2011 210 515

## Beschreibung

Die vorliegende Erfindung betrifft eine Vorrichtung zur Speicherung und Abgabe von flüssigen und / oder gasförmigen Medien unter Druck, aufweisend ein das Medium aufnehmenden Medienbehälter aus einem Kunststoffmaterial, mindestens ein mit dem Medienbehälter verbundenes Ventilanschlusselement und mindestens ein mit dem Ventilanschlusselement verbindbares Ventilelement, wobei der Medienbehälter einen einstückig angeformten und von dem Medienbehälter abstehenden Kragen mit einer Kragenaußenwandung und einer Krageninnenwandung aufweist. Das Ende des Kragens definiert hierbei den freien Querschnitt einer Öffnung des Medienbehälters, wobei das Ventilanschlusselement im Bereich dieser Öffnung angeordnet ist und ein Teilbereich der Kragenaußenwandung einem Teilbereich einer Wandung des Ventilanschlusselementes gegenüberliegend angeordnet ist.

Eine derartige Vorrichtung zur Speicherung und Abgabe von flüssigen und / oder gasförmigen Medien unter Druck ist beispielsweise aus der EP 2 115 343 B1 bekannt. Hierbei durchdringt ein Abschnitt des Ventilelements die Öffnung und wird von der Kragenwandung umschlossen. Um zu verhindern, dass das flüssige und / oder gasförmige Medium unter Druck aus dem Inneren des Medienbehälters entweichen kann, ist hierbei vorgesehen, dass im Bereich dieses Abschnittes mehrere O-Ringdichtungen zwischen diesem Abschnitt und der Krageninnenwandung vorgesehen sind. Aufgrund der Verformungseigenschaften der O-Ringe soll ein Austreten des Mediums dauerhaft verhindert werden. Nachteilig ist hierbei jedoch, dass aufgrund der Dimensionierung der O-Ringe diese nur in einem sehr geringen, nämlich einem kreisförmig umlaufenden, Bereich eine Abdichtung zwischen dem Abschnitt des Ventilelements und der Krageninnenwandung erzielen können. Dem Dokument ist daher zu entnehmen, dass zur Vergrößerung dieser Dichtfläche wenigstens ein zweiter O-Ring erforderlich ist, um eine dauerhafte Mediendichtheit zu gewährleisten. Die O-Ringe dichten zudem gegenüber der Krageninnenwandung des Medienbehälters, so dass eine dauerhafte Dichtheit der O-Ringe gegenüber einem Kunststoffmaterial gewährleistet sein muss, dessen Langzeitverformungen bzw. dessen Kriechverformung mit hoher Wahrscheinlichkeit zu Undichtigkeiten führen wird.

Die Druckschrift EP 0 821 104 B1 schlägt demgegenüber vor, dass ein Klemmring in das Ventilanschlusselement einschraubbar ist, welcher in einen kegelstumpfartigen Abschnitt übergeht. Dieser letztgenannte kegelstumpfartige Abschnitt presst dann die Innenwandung des Halsstückes eines Medienbehälters, welcher mit einer zum Abschnitt korrespondierenden Anschrägung versehen ist, gegen die Innenwandung des Ventilanschlusselementes. Nachteilig ist hierbei, dass diese Anschrägung des kegelstumpfartigen Abschnittes und die korrespondierende Anschrägung der Innenwandung des Kragens sehr exakt aufeinander abgestimmt sein müssen, um eine ausreichende Dichtheit dahingehend zu gewährleisten, dass das unter Druck stehende Medium nicht zwischen dem Klemmring und der Innenwandung des Ventilanschlusselementes (und infolgedessen zwischen der Innenwandung des Ventilanschlusselementes und der Kragenaußenwandung) vorbeidiffundiert bzw. vorbeifließt und aus dem Medienbehälter austritt. Die Erzielung einer dauerhaften Dichtheit ist insbesondere dann erschwert, wenn es sich um einen Medienbehälter aus einem thermoplastischen Kunststoffmaterial handelt. Aufgrund der zwischen dem Kragen aus einem thermoplastischen Kunststoffmaterial und dem kegelstumpfartigen Abschnitt entstehenden Schub- / Druckspannungen neigt das thermoplastische Kunststoffmaterial infolgedessen dazu, der anliegenden Schub- / Druckspannung auszuweichen. Man spricht hierbei von dem sogenannten Fließen oder Kriechen des Kunststoffmaterials. Dies hat zufolge, dass die Verpressung sich über die Zeit lockert bzw. relaxiert und somit zwangsläufig eine Undichtheit entsteht. Weitere Vorrichtungen gemäß dem Oberbegriff sind in der JP 2001050494 A und US 2007/012551 A1 offenbart.

Nachteilig am Stand der Technik ist daher, dass insbesondere zur dauerhaften Gewährleistung einer Dichtheit des Medienbehälters zwischen dem Ventilanschlusselement und dem Kragen des Medienbehälters aufwendige und insbesondere zusätzliche Dichtelement notwendig sind.

Der Erfindung liegt daher die Aufgabe zugrunde, eine Vorrichtung zur Speicherung und Abgabe von flüssigen und / oder gasförmigen Medien unter Druck derartig weiterzuentwickeln, dass diese bei einer geringen Anzahl von Dichtelementen eine verbesserte und dauerhafte Dichtheit gewährleistet.

Diese Aufgabe wird erfindungsgemäß gelöst durch eine Vorrichtung zur Speicherung und Abgabe von flüssigen und / oder gasförmigen Medien unter Druck aufweisend:
- einen das Medium aufnehmenden Medienbehälter aus einem Kunststoffmaterial, insbesondere aus einem thermoplastischen Kunststoffmaterial, vorzugsweise aus einem Polyamid,
- mindestens ein mit dem Medienbehälter verbundenes Ventilanschlusselement,
- mindestens ein mit dem Ventilanschlusselement verbindbares Ventilelement,
wobei der Medienbehälter einen einstückig angeformten und von dem Medienbehälter, vorzugsweise nach außen, abstehenden Kragen mit einer Kragenaußenwandung und einer Krageninnenwandung aufweist, wobei das Ende des Kragens den freien Querschnitt einer Öffnung des Medienbehälters definiert, wobei das Ventilanschlusselement im Bereich dieser Öffnung angeordnet ist und ein Teilbereich der Kragenaußenwandung einem Teilbereich einer Wandung des Ventilanschlusselementes gegenüberliegend angeordnet ist und wobei das Ventilelement einen Verpressungsabschnitt aufweist, der im Montagezustand der Vorrichtung einem Teilbereich der Krageninnenwandung gegenüberliegt, wobei zwischen dem Teilbereich der Wandung und dem Verpressungsabschnitt zusätzlich wenigstens ein Rückstellelement derart angeordnet ist, dass bei der Montage des Ventilelementes der Kragen und das Rückstellelement zwischen dem Teilbereich der Wandung und dem Verpressungsabschnitt gemeinsam verpresst werden, wobei das Rückstellelement aus einem vernetzten Kunststoffmaterial, vorzugsweise aus vernetztem Polyethylen, gebildet ist und, wobei der Verpressungsabschnitt, der Kragen und das Rückstellelement so aufeinander abgestimmt und ausgebildet sind, dass durch die gemeinsame Verpressung von Kragen und Rückstellelement eine elastische Deformation des Rückstellelements einstellbar ist, die größer ist als die maximale Kriechverformung des Kragens über die Einsatzdauer der Vorrichtung, so dass die Kriechverformung des Kragens über das Rückstellelement ausgleichbar ist und zwischen dem Verpressungsabschnitt, dem Kragen, dem Rückstellelement und dem Teilbereich der Wandung ein dauerhafter Presssitz entsteht. Für den Fall, dass das Rückstellelement an dem Teilbereich der Wandung anliegt kann so der Dichtungsbereich zwischen dem Teilbereich der Wandung und dem Rückstellelement und der Dichtungsbereich zwischen dem Rückstellelement und dem Kragen gegen das unter Druck stehende Medium abgedichtet werden. Auch für den Fall, dass der Kragen an dem Teilbereich der Wandung anliegt kann der Dichtungsbereich zwischen dem Teilbereich der Wandung und dem Kragen gegen das unter Druck stehende Medium abgedichtet werden. Ein dauerhafter Presssitz meint in diesem Zusammenhang, dass der Presssitz zumindest über die übliche Einsatzdauer der erfindungsgemäßen Vorrichtung und bei üblichen Gebrauchsbedingungen erhalten bleibt. Der Einsatzdauer kann insbesondere eine Zahl von fünftausend Füllzyklen der Vorrichtung von 20 bar auf 875 bar entsprechen, wobei die Füllrate und die Temperatur des Mediums oder der Medien so eingestellt ist, dass die Temperatur des Ventilelementes, insbesondere des Verpressungsabschnittes, und/oder des Ventilanschlusselementes beim Befüllen einen Wert von höchstens 85°C erreicht. Eine Zahl von fünftausend Füllzyklen entspricht beispielhaft bei einer Vorrichtung für ein Kraftfahrzeug mit einem Tankfüllvolumen für eine Reichweite von 500 km einer üblichen Einsatzdauer von 250.000 km des Kraftfahrzeuges. Erfindungsgemäß kann die Kriechverformung des Kunststoffmaterials des Kragens über das Rückstellelement aus einem vernetzten Kunststoffmaterial ausgeglichen werden. Ein vernetzter, insbesondere ein thermoplastisch vernetzter, Kunststoff zeigt keine bzw. vernachlässigbar geringe Fließvorgänge (Kriechen) und verhält sich weitgehend rein elastisch. Das vernetzte Kunststoffmaterial unterliegt daher selbst keiner oder nur einer deutlich geringeren Kriechverformung und federt gewissermaßen so nach, dass die Kriechverformung des Kragens ausgeglichen wird, so dass zwischen dem Verpressungsabschnitt, dem Kragen, dem Rückstellelement und dem Teilbereich der Wandung ein dauerhafter Presssitz entsteht, der gegen das unter Druck stehende Medium abdichtet.

Als besonders vorteilhaft hat sich hierbei die Verwendung von vernetztem Polyethylen für das vernetzte Kunststoffmaterial des Rückstellelementes erwiesen. Als Vernetzung hat sich hierbei insbesondere die Vernetzung des Polyethylens unter erhöhter Temperatur durch radikal bildende Peroxide (PE-Xa) als vorteilhaft erwiesen. Darüber hinaus kann auch eine silanische Vernetzung von Polyethylen (PE-Xb) oder eine Strahlenvernetzung von Polyethylen (PE-Xc) angewendet werden. Der Vernetzungsgrad des thermoplastischen Kunststoffs bzw. des Polyethylens kann gemäß der vorliegenden Erfindung 20% bis 95%, bevorzugt 50% bis 90% und besonders bevorzugt 75% bis 85% betragen. Vernetzungsgrade von wenigstens 70% haben sich für Vorrichtungen mit Medien von deutlich über 500 bar zulässigem Druck des Mediums als besonders geeignet erwiesen. Prinzipiell bezeichnet man das Ventilelement auch als On-Tank-Valve (kurz OTV). Das unter Druck stehende Medium kann insbesondere Wasserstoff (H₂) sein. Die Vorrichtung dient dann zur Speicherung und Abgabe von flüssigem und/oder gasförmigem Wasserstoff unter Druck. Der zulässige Druck des Mediums innerhalb der erfindungsgemäßen Vorrichtung kann zwischen 200 bar bis 1500 bar, vorzugsweise zwischen 400 bar und 1250 bar, weiter vorzugsweise zwischen 600 bar und 1000 bar, besonders bevorzugt zwischen 600 bar und 800 bar liegen.

Der Medienbehälter kann aus einem Kunststoffmaterial, vorzugsweise aus einem thermoplastischen Kunststoffmaterial gebildet sein. Hierzu eignet sich insbesondere Polyamid (vorzugsweise Polyamid 6, Polyamid 6.6, Polyamid 12, PA 6.10, PA 6.12, PA 10 oder PA 11), oder elastomermodifiziertes Polyamid (vorzugsweise PA6.66), Polypropylen, Polyethylen (vorzugsweise Polyethylen mit hoher Dichte "HDPE"), Polyoxymethylen, Polyphenylensulfid, Polyethersulfon, Polyetheretherketon, Polyetherimid, Polyethylenterephthalat, vergleichbare Technische oder Hochtemperatur-Kunststoffmaterialien oder Kombinationen der vorgenannten Kunststoffmaterialien. Alternativ kann auch der Medienbehälter aus einem vernetzten, vorzugsweise geringer vernetzten als das Kunststoffmaterial des Rückstellelementes, Kunststoffmaterial bestehen. Ein Beispiel wäre vernetztes Polyethylen mit einem Vernetzungsgrad zwischen 5% und 50%, vorzugsweise zwischen 5% und 25%.

Der Verpressungsabschnitt, der Kragen und das Rückstellelement sind vorzugsweise so aufeinander abgestimmt und ausgebildet, dass durch die gemeinsame Verpressung von Kragen und Rückstellelement eine elastische Deformation des Rückstellelementes, die wenigstens dem 0,3-fachen, vorzugsweise wenigstens 0,5-fachen, weiter vorzugsweise wenigstens 0,8-fachen, weiter vorzugsweise wenigstens 1,0-fachen, besonders bevorzugt wenigstens 1,2-fachen der Wandstärke des Kragens vor der Montage des Ventilelements entspricht, einstellbar ist. Entsprechend abgestimmte Abmessungen bzw. Dimensionierungen der Wandstärke des Rückstellelements zu der Wandstärke des Kragens bzw. zwischen der elastischen Deformation des Rückstellelements und der Wandstärke des Kragens haben sich als besonders vorteilhaft erwiesen. Dies ist im Hinblick auf eine Abwägung zwischen der Gewährleistung der ausreichenden Mediendichtheit der Vorrichtung und den aufzubringenden Montagekräften bei der Montage des Ventilelementes zu sehen.

Bevorzugt ist die Wandstärke des Rückstellelements, wenigstens 1,0-fach, vorzugsweise wenigstens 1,2-fach, weiter vorzugsweise wenigstens 1,5-fach, weiter vorzugsweise wenigstens 1,8-fach, weiter vorzugsweise wenigstens 2,2-fach, weiter vorzugsweise wenigstens 2,5-fach, größer als die Wandstärke des Kragens. Die Wandstärke des Kragens entspricht hierbei insbesondere der von dem Teilbereich der Kragenaußenwandung und dem Teilbereich der Krageninnenwandung eingeschlossenen Wandstärke.

Der Verpressungsabschnitt kann eine zylindrische oder kegelstumpfförmige Geometrie aufweisen. Insbesondere eine zylindrische Geometrie oder stufenförmige aufeinanderfolgende, zylindrische Geometrien haben sich bei der Fertigung derartiger Vorrichtungen als besonders bevorzugt erwiesen, da die hierbei einzuhaltenden Toleranzen am einfachsten realisiert und eingehalten werden können. Zudem weist eine zylindrische Geometrie einen gleichmäßigen Presssitz und eine gleichmäßige Druckspannungsverteilung entlang der gesamten Kontaktfläche (Dichtfläche) zwischen Verpressungsabschnitt und Kragen bzw. Rückstellelement (je nachdem wo das Rückstellelement angeordnet ist) auf.

Das Rückstellelement und der Kragen sind hülsenförmig ausgebildet und ineinandergesteckt oder aufeinandergesteckt. Hülsenförmig meint hierbei auch Geometrien, die im Längsschnitt trapezförmig, oder rechteckig und trapezförmig, ausgebildet sind. Der Kragen und/oder das Rückstellelement kann/können hierbei eine Trichterform aufweisen. Der Verpressungsabschnitt wird von dem Rückstellelement und dem Kragen umschlossen, wobei der Außendurchmesser des Verpressungsabschnittes vor der Montage des Ventilelements größer als der Innendurchmesser des Kragens und / oder des Rückstellelements vor der Montage des Ventilelementes ist. Letztgenannter Innendurchmesser ist davon abhängig, ob das Rückstellelement oder der Kragen in der Paarung Rückstellelement-Kragen innenliegend angeordnet ist, wobei die Möglichkeit besteht, dass für sich genommen beide Innendurchmesser (also von Kragen und Rückstellelement) kleiner als der Außendurchmesser des Verpressungsabschnittes sind. Im Fall einer kegelstumpfförmigen Geometrie ist der jeweilige Außendurchmesser des Verpressungsabschnitts vor der Ventilelementmontage größer als der jeweilige - im Montagezustand dann korrespondierende bzw. dann gegenüberliegende - Innendurchmesser des Rückstellelementes und/oder Kragens.

Vorzugsweise liegt der Quotient aus der Differenz des Außendurchmessers des Verpressungsabschnitts und des Innendurchmessers des Rückstellelementes und/oder Kragens in Bezug zu dem Innendurchmesser des Rückstellelementes und/oder des Kragens in einem Bereich zwischen 0,001 und 0,3, vorzugsweise zwischen 0,01 und 0,2, weiter vorzugsweise zwischen 0,08 und 0,15, weiter vorzugsweise zwischen 0,1 und 0,12. Dieser als Übermaß bezeichenbare Quotient weist für diese Bereiche einen optimierten Wert auf. Diese optimierten Werte gewährleisten akzeptable Montagekräfte des Ventilelements bei einem die Dichtheit dauerhaft gewährleistenden Presssitz. Dieses Übermaß führt beispielhaft bei der Montage des Ventilelementes zu der Verpressung des hülsenförmigen Kragens und Rückstellelementes, wobei das Rückstellelement vorzugsweise so ausgebildet ist, dass dieses nicht nur radial verpresst wird, sondern sich auch in Montagerichtung längt.

Das Rückstellelement kann (nicht erfindungsgemäß) alternativ scheibenförmig ausgebildet sein. Hierbei kann an dem oberen Ende des Kragens ein die Öffnung umrahmender, vorzugsweise mit dem Kragen einen Winkel im Bereich von 20° bis 170° einschließender, Flansch angeformt sein, wobei die Flanschunterseite den Teilbereich der Kragenaußenwandung und die Flanschoberseite den Teilbereich der Krageninnenwandung bildet.

Denkbar ist es alternativ ein Rückstellelement so auszubilden, dass dieses aus einer Kombination einer hülsenförmigen und einer scheibenförmigen Geometrie gebildet ist. Hierbei können dann mehrere Verpressungsabschnitte an dem Ventilelement vorgesehen sein, wobei einer von dem Rückstellelement und dem Kragen umschlossen wird, wobei der Außendurchmesser dieses einen Verpressungsabschnittes vor der Montage des Ventilelements größer als der Innendurchmesser des Kragens und / oder des Rückstellelementes ist, und wobei an dem oberen Ende des Kragens zusätzlich ein die Öffnung umrahmender, vorzugsweise mit dem Kragen einen Winkel im Bereich von 20° bis 170° einschließender Flansch angeformt ist, wobei die Flanschunterseite den Teilbereich der Kragenaußenwandung und die Flanschoberseite den Teilbereich der Krageninnenwandung bildet, und der weitere Verpressungsabschnitt im Montagezustand dieser Flanschoberseite gegenüberliegt.

Das Rückstellelement kann mindestens eine, insbesondere durch Ausformungen oder Ausnehmungen gebildete, definierte Oberflächenunregelmäßigkeit auf oder in der Oberfläche des Rückstellelements aufweisen. Diese Oberflächenunregelmäßigkeit bewirkt eine punktuelle und/oder linienförmige Erhöhung der Druckspannung und ermöglicht eine weitere Verbesserung der Dichtwirkung.

Alternativ oder in Kombination kann auch der Kragen bzw. die Kragenaußenwandung oder die Krageninnenwandung mindestens eine definierte Oberflächenunregelmäßigkeit aufweisen. Diese Oberflächenunregelmäßigkeit bewirkt eine punktuelle und/oder linienförmige Erhöhung der Druckspannung und ermöglicht eine weitere Verbesserung der Dichtwirkung.

Beispielhaft für eine definierte Oberflächenunregelmäßigkeit sind gezielt eingestellte Rauheitswerte, ein definiert eingebrachtes Fischgrätmuster, Rippen oder andere Ausformungen oder Ausnehmungen auf oder in der Oberfläche des Rückstellelements und/oder des Kragens.

Die definierte Oberflächenunregelmäßigkeit kann insbesondere durch ein im Längs- und / oder Querschnitt wellenförmiges Rückstellelement und/oder wellenförmigen Kragen gebildet sein. Hierbei weist das Rückstellelement und/oder der Kragen vorzugsweise eine konstante Wandstärke auf.

Das im Längs- und / oder Querschnitt wellenförmig ausgebildete Rückstellelement und/oder der im Längs- und / oder Querschnitt wellenförmig ausgebildete Kragen kann in einem Teilbereich, segmentweise oder über die gesamte Länge wellenförmig ausgebildet sein. Aufgrund der gemeinsamen Verpressung von Kragen und Rückstellement wird der im Längs- und / oder Querschnitt wellenförmige Kragen und/oder das im Längs- und / oder Querschnitt wellenförmige Rückstellelement weitgehend geglättet, so dass keine oder eine im Vergleich zum Ausgangszustand vor der Ventilelementmontage abgeflachte Wellenform entsteht. Vorteilhafterweise kann hiermit ein Presssitz mit einer höheren Verpressung erreicht werden, ohne im gleichen Maße die Montagekräfte des Ventilelements zu erhöhen. Aufgrund der erfindungsgemäßen Verwendung eines vernetzten Kunststoffmaterials für das Rückstellelement, vorzugsweise eines vernetzten Polyethylens, wird das vernetzte Kunststoffmaterial bei Temperaturwechseln, insbesondere bei Temperaturerhöhungen, bestrebt sein, die ursprüngliche Wellenform wieder einzunehmen, so dass bei einem Temperaturwechsel, insbesondere bei einer Temperaturerhöhung zudem ein selbstdichtender Effekt zwischen dem Teilbereich der Wandung des Ventilanschlusselementes, dem Kragen, dem Rückstellelement und dem Verpressungsabschnitt entsteht. Dieser Effekt kann dadurch unterstützt werden, dass der Teilbereich der Wandung des Ventilanschlusselements ebenfalls eine definierte Oberflächenunregelmäßigkeit, vorzugsweise in Form von Rippen oder Ausformungen aufweist, welche weiter vorzugsweise ebenfalls in einer Wellenform angeordnet sind. Das sich quasi an seine alte Form erinnernde Material des Kragens und/oder Rückstellelementes zieht sich dann bei Temperaturwechseln, insbesondere bei Temperaturerhöhungen, selbstständig dichtend in die Zwischenräume zwischen den Rippen oder Ausformungen. Bevorzugt ist die Oberflächenunregelmäßigkeit der Innenwandung des Ventilanschlusselementes durch Rippen oder Ausformungen gebildet, welche in einer Wellenform angeordnet sind, wobei die Wellenlänge und/oder Amplitude dieser Wellenform kleiner gewählt ist als die Wellenlänge und/oder Amplitude des im Längs- und/oder Querschnitts wellenförmigen Rückstellelementes und/oder Kragens. Dies gewährleistet vorteilhaft, dass ein Wellenberg des im Längs- und/oder Querschnitts wellenförmigen Rückstellelementes und/oder Kragens einem Wellenberg des Teilbereichs der Wandung des Ventilanschlusselementes gegenüberliegt und in diesem Bereich lokal eine sehr hohe Verpressung und eine damit verbundene weiter verbesserte Abdichtung entsteht.

Besonders bevorzugt ist an dem Rückstellelement mindestens ein Rastelement angeordnet, das mit einem an der Innenwandung des Ventilanschlusselements ausgebildeten Rastgegenelement derart zusammenwirkt, dass bei der Montage des Ventilelements eine Verschiebung des Rückstellelementes relativ zu dem Ventilanschlusselement und / oder dem Kragen behindert ist. Das Rastelement ist hierbei vorzugsweise einstückig an dem Rückstellelement angeformt und weiter vorzugsweise im Montagezustand oberhalb des Kragens angeordnet. Vorteilhafterweise kann der Presssitz bzw. die Verpressung weiter verstärkt werden, da hierbei zwar höhere Montagekräfte notwendig sind, um das Ventilelement zu montieren, diese höheren Montagekräfte jedoch nicht zu einem nachteiligen Verschieben oder Verdrücken des Rückstellelementes und/oder des Kragens führen können, da eine Verschiebung des Rückstellelementes und/oder des Kragens aufgrund der Rastelement-Rastgegenelement-Paarung behindert bzw. verhindert ist. Das Rastelement kann insbesondere von dem Rückstellelement seitlich abstehen, so dass das Rastelement, aufgrund des in den Kragen bzw. das Rückstellelement eingeführten Verpressungsabschnittes des Ventilelements, nicht mehr aus dem Rastgegenelement zurückweichen kann.

Alternativ kann das Rastgegenelement von dem Teilbereich oder oberhalb des Teilbereichs der Wandung des Ventilanschlusselementes abstehen und das Rastelement durch eine Ausnehmung oder eine Öffnung im Rückstellelement und/oder Kragen gebildet sein in welche oder in welcher das Rastgegenelement eingreifen kann.

Das Rastelement ist vorzugsweise einstückig mit dem Rückstellelement oder dem Kragen ausgebildet, beispielsweise aus diesem mechanisch ausgebildet (z.B. durch Fräsen) oder bereits bei der Herstellung an- oder ausgeformt (z.B. bei der Herstellung des Rückstellelementes 11, 11a im Kunststoff-Spritzgussverfahren).

Die Wandstärke des Kragens ist vorzugsweise geringer als die Wandstärke des angrenzenden Medienbehälters. Die typische Wandstärke des Medienbehälters liegt im Bereich von 2 bis 6 mm, wobei die reduzierte Wandstärke des Kragens vorzugsweise im Bereich von 0,5 bis 2 mm liegt.

Das Ventilelement kann mehrteilig aufgebaut sein, wobei der Verpressungsabschnitt vorzugsweise an einem separaten, weiter vorzugsweise hülsenförmigen, ersten Segment des Ventilelements angeordnet ist. Der mehrteilige Aufbau ist vorteilhaft für den Fall einer Wartung oder Reparatur der erfindungsgemäßen Vorrichtung, da ggf. nur ein Teil bzw. ein Segment des Ventilelements ausgetäuscht oder gewartet werden muss.

Bevorzugt ist oberhalb des Kragens und / oder des Rückstellelementes ein zusätzliches Dichtungselement, vorzugsweise ein O-Ring vorgesehen, welcher das Ventilanschlusselement gegen das Ventilelement abdichtet. Vorteilhafterweise erfolgt die Abdichtung somit zwischen dem Ventilanschlusselement und dem Ventilelement und nicht zwischen dem Ventilanschlusselement und dem Kragen. Dies ist insbesondere dann von Vorteil, wenn das Ventilanschlusselement und das Ventilelement aus einem metallischen Werkstoff (insbesondere aus einem Leichtmetall wie Aluminium, Titan oder Magnesium) gebildet sind. Derartige metallische Werkstoffe neigen bei den Einsatztemperaturen der Vorrichtung nicht zum Kriechen, sodass durch die direkte Abdichtung dieses metallischen Ventilanschlusselements gegen das metallische Ventilelement mittels eines Dichtelements eine zusätzliche dauerhafte Dichtung gewährleistet ist. Das Dichtelement kann durch ein Stützelement (z.B. einen Stützring) lagefixiert sein. Das Stützelement verhindert eine Lageveränderung des Dichtelements hinein in den Spalt zwischen Ventilelement und Ventilanschlusselement im oder während des Gebrauch der Vorrichtung. Das Stützelement kann zudem ein Lösen des Dichtelements aus seiner Aufnahme (z.B. einer umlaufende Ringnut innerhalb des Ventilelements) an dem Ventilelement verhindern. Das Stützelement befindet sich vorzugsweise in derselben Aufnahme wie das Dichtelement.

Für den Fall, dass das Ventilelement mehrteilig aufgebaut ist, wobei der Verpressungsabschnitt an einem separaten, vorzugsweisen hülsenförmigen, ersten Segment des Ventilelements angeordnet ist und oberhalb des Kragens und / oder des Rückstellelements ein Dichtungselement, vorzugsweise ein O-Ring vorgesehen ist, welcher das Ventilanschlusselement gegen das Ventilelement abdichtet, ist das Dichtungselement vorzugsweise an einem separaten zweiten Segment des Ventilelements angeordnet. Das Dichtungselement kann dann vorteilhaft leichter gewechselt bzw. gewartet werden.

Besonders bevorzugt ist im Bereich des Verpressungsabschnittes und in dem Teilbereich der Wandung kein separates Dichtelement vorgesehen. Insbesondere ist auch zwischen dem Bereich des Verpressungsabschnittes und dem Teilbereich der Wandung kein separates Dichtungselement vorgesehen. Die erfindungsgemäße Verpressung von Rückstellelement und Kragen führt zu einer deutlich größeren Dichtungsfläche zwischen Teilbereich der Wandung des Ventilanschlusselementes und dem Verpressungsabschnitt als bei bis dato bekannten Vorrichtungen des Standes der Technik, so dass in diesem Bereich gänzlich auf zusätzliche Dichtelemente verzichtet werden kann. Für den Fall, dass das Rückstellelement an dem Teilbereich der Wandung anliegt kann der Dichtungsbereich zwischen dem Teilbereich der Wandung und dem Rückstellelement und der Dichtungsbereich zwischen dem Rückstellelement und dem Kragen ohne ein zusätzliches Dichtelement gegen das unter Druck stehende Medium abgedichtet werden. Auch für den Fall, dass der Kragen an dem Teilbereich der Wandung anliegt kann der Dichtungsbereich zwischen dem Teilbereich der Wandung und dem Kragen ohne ein zusätzliches Dichtelement gegen das unter Druck stehende Medium abgedichtet werden

Der Medienbehälter kann außerhalb des Bereiches des Kragens bzw. des Rückstellelementes mit dem Ventilanschlusselement fest verbunden sein, so dass der Vorteil eines möglichst flächig anliegenden Presssitzes erhalten bleibt. Hierzu kann vorgesehen sein, dass der Medienbehälter mittels einer Schraubverbindung und/oder mittels einer Klebstoffschicht mit dem Ventilanschlusselement fest verbunden ist.

Oberhalb des Kragens ist eine Verschraubung zwischen dem Ventilelement und dem Ventilanschlusselement vorgesehen. Alternativ kann im Fall eines hülsenförmig ausgebildeten Rückstellelementes und Kragens, die ineinander- oder aufeinandergesteckt sind, und der Verpressungsabschnitt von dem Rückstellelement und dem Kragen umschlossen wird, wobei der Außendurchmesser des Verpressungsabschnittes vor der Montage des Ventilelements größer als der Innendurchmesser des Kragens und / oder des Rückstellelementes ist, auf eine Verschraubung verzichtet werden, in dem das Ventilelement bzw. das separate, vorzugsweise hülsenförmige, erste Segment des Ventilelementes eingepresst ist. Durch den Kraft- und Formschluss ist das Ventilelement ausreichend fest mit dem Ventilanschlusselement verbunden.

Der Teilbereich der Wandung des Ventilanschlusselementes kann mindestens eine definierte Oberflächenunregelmäßigkeit aufweisen.

Der Medienbehälter kann von einer, vorzugsweise gewickelten oder geflochtenen, Armierungsschicht umgeben sein. Insbesondere zur Realisierung von Drücken des Mediums innerhalb des Medienbehälters im typischen Bereich von mehreren hundert bar Innendruck ist eine Armierungsschicht zwingend erforderlich. Die Armierungsschicht kann Filamente in Form von z.B. Fäden oder Fasern aufweisen. Die Filamente können aus Kohlenstoff, Glas, Polyamid, Mineralwerkstoffen oder einer Kombination der vorgenannten Werkstoffe gebildet sein. Die Armierungsschicht kann in einer Matrix aus thermoplastischem oder duroplastischem Harz eingebettet sein.

Weiter ein Teil der Erfindung ist eine Kraftstoff-Energieumwandlungsvorrichtung mit einer Brennstoffzelleneinheit, mindestens einer Medien-Verbindungsleitung, mindesten einem Druckminderer und mindestens einer erfindungsgemäßen Vorrichtung, insbesondere einer Vorrichtung nach einem der Ansprüche 1 bis 16, wobei die Medien-Verbindungsleitung die Vorrichtung mit der Brennstoffzelleneinheit medienleitend verbindet und der Druckminderer in Medienflussrichtung vor der Brennstoffzelleneinheit angeordnet ist.

Teil der Erfindung ist ferner ein Kraftfahrzeug mit einer erfindungsgemäßen Vorrichtung, insbesondere einer Vorrichtung nach einem der Ansprüche 1 bis 16, oder mit einer Kraftstoff-Energieumwandlungsvorrichtung nach Anspruch 17.

Ein Verfahren zur Montage einer erfindungsgemäßen Vorrichtung zur Speicherung und Abgabe von flüssigen und / oder gasförmigen Medien unter Druck, insbesondere einer Vorrichtung nach einem der Ansprüche 1 bis 16, umfasst die folgenden Schritte:
- Bereitstellen eines in einem Formgebungsverfahren, vorzugsweise einem Blasformungsverfahren, hergestellten Medienbehälters,
- Anordnen des Ventilanschlusselementes an den Medienbehälter,
- Montieren des Ventilelementes, wobei der Kragen und das Rückstellelement zwischen dem Teilbereich der Wandung und dem Verpressungsabschnitt gemeinsam verpresst werden,
- Fortführen der Montage des Ventilelementes bis die gemeinsame Verpressung von Kragen und Rückstellelement zu einer Deformation des Rückstellelements geführt hat, die größer ist als die maximale Kriechverformung des Kragens über die Einsatzdauer der Vorrichtung,
- so dass die Kriechverformung des Kragens über das Rückstellelement ausgeglichen wird und zwischen dem Verpressungsabschnitt, dem Kragen, dem Rückstellelement und dem Teilbereich der Wandung ein dauerhafter Presssitz entsteht.

Im Folgenden wird die Erfindung anhand lediglich Ausführungsbeispiele darstellender Zeichnungen erläutert. Es zeigen schematisch:
- Fig. 1a, 1b: einen axialen Längsschnitt durch eine erfindungsgemäße Vorrichtung vor und nach der Montage des Ventilelementes,
- Fig. 2a, 2b: einen axialen Längsschnitt durch eine weitere erfindungsgemäße Vorrichtung vor und nach der Montage des Ventilelementes,
- Fig. 3a, 3b: eine Detaildarstellung der axialen Längsschnitte vor und nach der Montage des Ventilelementes aus Fig. 1a, 1b, 2a, 2b,
- Fig. 4a, 4b: eine Detaildarstellung durch einen axialen Längsschnitt einer weiteren erfindungsgemäßen Vorrichtung,
- Fig. 5a, 5b: eine Detaildarstellung durch einen axialen Längsschnitt einer weiteren erfindungsgemäßen Vorrichtung,
- Fig. 6a, b, c: eine Darstellung des Funktionsprinzips der erfindungsgemäßen Vorrichtung,
- Fig. 7: eine Darstellung einer erfindungsgemäßen Kraftstoff-Energieumwandu ngsvorrichtung,
- Fig. 8: eine dreidimensionale Darstellung eines Teilbereichs eines Rückstellelementes aus den Figuren 1a bis 3b.

In den Figuren werden gleiche oder funktionsgleiche Elemente mit dem gleichen Bezugszeichen versehen.

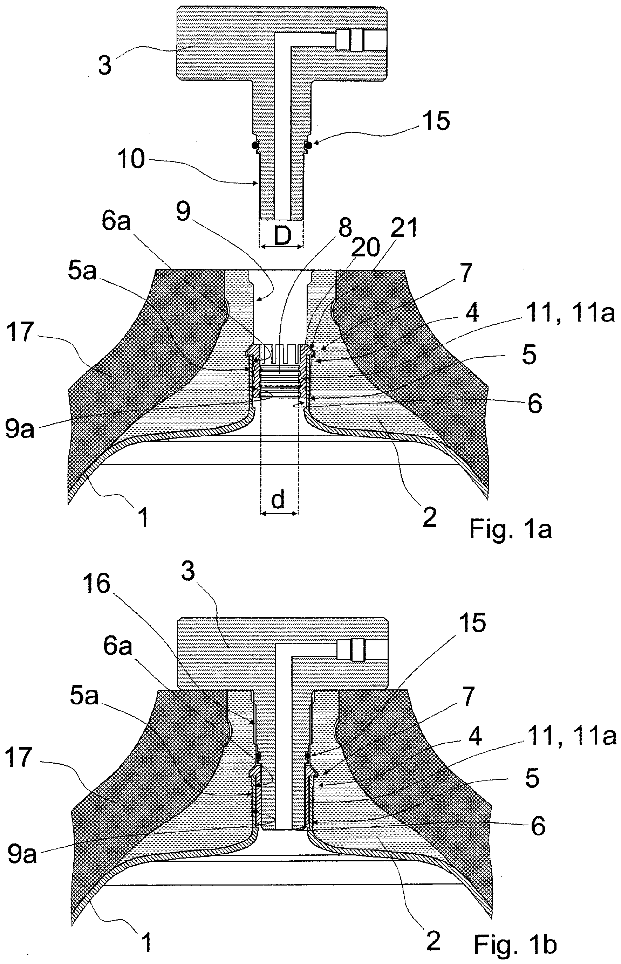

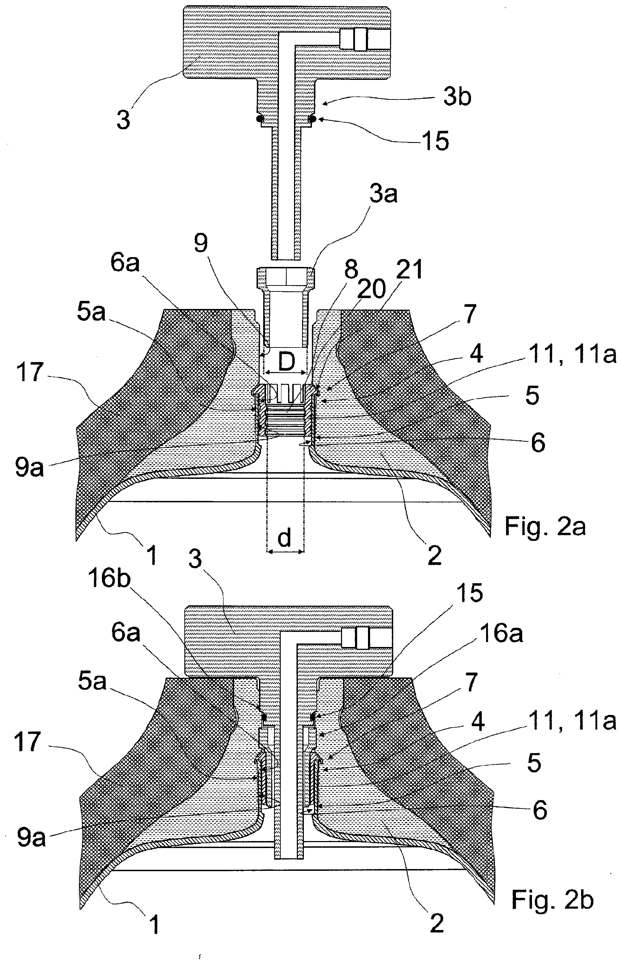

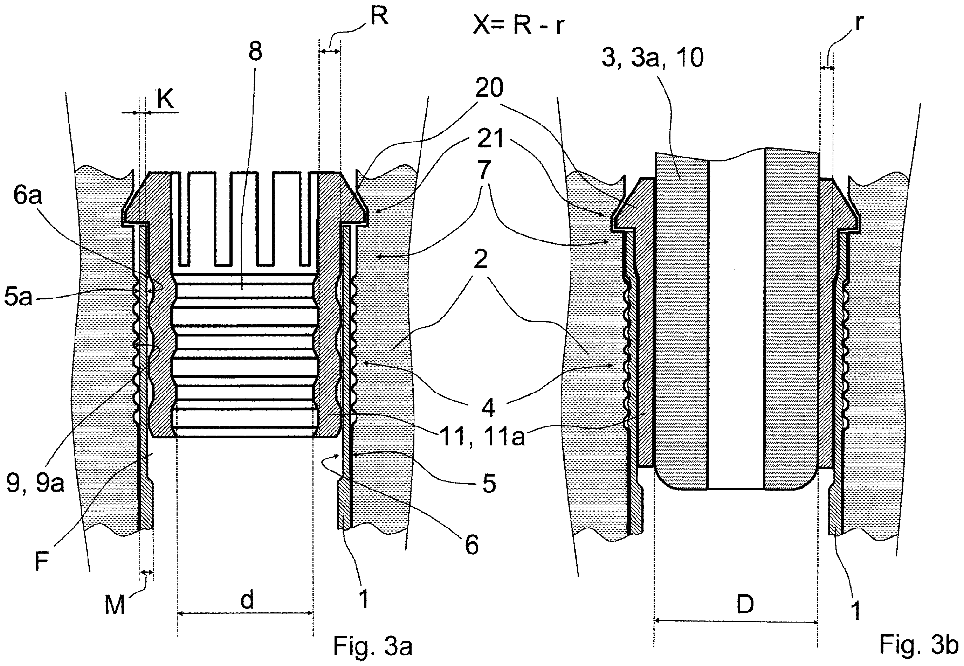

In den Fig. 1a, 2a und 3a ist ein axialer Längsschnitt durch eine erfindungsgemäße Vorrichtung vor der Montage eines Ventilelements 3 dargestellt. Die hier gezeigten Vorrichtungen zur Speicherung und Abgabe von flüssigen und / oder gasförmigen Medien, insbesondere von Wasserstoff, unter Druck weisen einen das Medium aufnehmenden Medienbehälter 1 aus einem Kunststoffmaterial, in diesem Fall aus Polyamid, ein mit dem Medienbehälter 1 verbundenes Ventilanschlusselement 2, vorzugsweise aus Aluminium und ein mit dem Ventilanschlusselement 2 verbindbares Ventilelement 3 auf. Der Medienbehälter 1 weist einen einstückig angeformten und von dem Medienbehälter 1 nach außen abstehenden Kragen 4 mit einer Kragenaußenwandung 5 und einer Krageninnenwandung 6 auf. Das Ende 7 des Kragens 4 definiert den freien Querschnitt einer Öffnung 8 des Medienbehälters. Das Ventilanschlusselement 2 ist im Bereich dieser Öffnung 8 angeordnet und ein Teilbereich 5a der Kragenaußenwandung 5 ist einem Teilbereich 9a einer Wandung 9 des Ventilanschlusselements 2 gegenüberliegend angeordnet. Das Ventilelement 3 weist einen Verpressungsabschnitt 10 auf, der in dem in den Fig. 1b, 2b und 3b gezeigten Montagezustand der Vorrichtung einem Teilbereich 6a der Krageninnenwandung 6 gegenüberliegt. Zwischen dem Teilbereich 9a der Wandung 9 und dem Verpressungsabschnitt 10 ist zusätzlich ein Rückstellelement 11, 11a derart angeordnet, dass bei der Montage des Ventilelements 3 der Kragen 4 und das Rückstellelement 11, 11a zwischen dem Teilbereich 9a der Wandung 9 und dem Verpressungsabschnitt 10 gemeinsam verpresst werden. Das Rückstellelement 11, 11a ist hierbei aus einem vernetzten Kunststoffmaterial, insbesondere aus vernetztem Polyethylen, gebildet. Wie in den Fig. 1b, 2b und 3b dargestellt, sind der Verpressungsabschnitt 10, der Kragen 4 und das Rückstellelement 11, 11a so aufeinander abgestimmt und ausgebildet, dass durch die gemeinsame Verpressung von Kragen 4 und Rückstellelement 11, 11a eine elastische Deformation X des Rückstellelements 11, 11a einstellbar ist, die größer ist als die maximale Kriechverformung Y des Kragens 4 über die Einsatzdauer der Vorrichtung, so dass die Kriechverformung Y des Kragens 4 über das Rückstellelement 11, 11a ausgleichbar ist und zwischen dem Verpressungsabschnitt 10, dem Kragen 4 und dem Rückstellelement 11, 11a und dem Teilbereich 9a der Wandung 9 ein dauerhafter Presssitz entsteht. Der Presssitz ermöglicht eine Abdichtung der jeweiligen Dichtungsbereiche gegen das unter Druck stehende Medium. In den Figuren 3a und 3b sind entsprechend vergrößerte Detaildarstellungen der in den Figuren 1a, 2a, 1b und 2b gezeigten axialen Längsschnitte der erfindungsgemäßen Vorrichtung zu sehen. Hierbei ist erkennbar, dass die elastische Deformation X, also die Differenz aus der Wandstärke R des Rückstellelements und der Wandstärke r des Rückstellelementes, nach dem gemeinsamen Verpressen von Kragen 4 und Rückstellelement 11, 11a, wenigstens dem 0,3-fachen, vorzugsweise wenigstens 0,5-fachen, weiter vorzugsweise wenigstens 0,8-fachen, weiter vorzugsweise wenigstens 1,0-fachen, bevorzugt wenigstens dem 1,2-fachen der Wandstärke K des Kragens 4 vor der Montage des Ventilelements 3, 3a entspricht. Die Wandstärke R des Rückstellelements 11, 11a ist wenigstens 1,8-fach größer als die von dem Teilbereich 5a der Kragenaußenwandung 5 und dem Teilbereich 6a der Krageninnenwandung 6 eingeschlossene Wandstärke K des Kragens 4. Das Rückstellelement 11a und der Kragen 4 sind jeweils hülsenförmig ausgebildet und ineinandergesteckt, und der Verpressungsabschnitt 10 von dem Rückstellelement 11a und dem Kragen 4 umschlossen. Alternativ könnte auch, entgegen der in den Figuren 1a bis 3b gezeigten Darstellungen, das Rückstellelement auf den Kragen und nicht in den Kragen gesteckt sein. Der Außendurchmesser D des Verpressungsabschnitts 10 ist vor der Montage des Ventilelements 3, 3a (vgl. Fig. 1a, 2a und 3b) größer als der Innendurchmesser d des Kragens 4 und / oder des Rückstellelements 11a (vgl. Fig. 1a, 2a und 3a). Der Quotient (D-d) / d aus der Differenz (D-d) des Außendurchmessers D des Verpressungsabschnitts 10 und des Innendurchmessers d des Kragens 4 und / oder des Rückstellelementes 11a vor der Montage des Ventilelements 3, 3a in Bezug zu (=Division durch) dem Innendurchmesser d des Kragens 4 und / oder des Rückstellelementes 11a vor der Montage des Ventilelements 3, 3a liegt in einem Bereich zwischen 0,001 und 0,3, vorzugsweise zwischen 0,01 und 0,2, weiter vorzugsweise zwischen 0,08 und 0,15, weiter vorzugsweise zwischen 0,1 und 0,12. Das Rückstellelement 11, 11a weist eine, insbesondere durch Ausformungen oder Ausnehmungen gebildete, definierte Oberflächenunregelmäßigkeit auf oder in der Oberfläche des Rückstellelements 11, 11a auf. Diese definierte Oberflächenunregelmäßigkeit ist durch ein im Längsschnitt wellenförmiges Rückstellelement 11, 11a gebildet, wobei das Rückstellelement 11, 11a hierbei eine konstante Wandstärke R aufweist. An dem in den Fig. 1a bis 3b gezeigten Rückstellelement 11, 11a sind mehrere Rastelemente 20 angeordnet, die mit einem an der Innenwandung 9 des Ventilanschlusselementes 2 ausgebildeten Rastgegenelement 21 (hier in Form einer umlaufenden Nut) derart zusammenwirken, dass bei der Montage des Ventilelementes 3, 3a eine Verschiebung des Rückstellelementes 11, 11a relativ zu dem Ventilanschlusselement 2 und / oder dem Kragen 4 behindert ist. Das Vorsehen von wenigstens einem Rastelement 20 bietet den Vorteil, dass bei der Montage des Ventilelementes 3, 3a das Rückstellelement 11, 11a quasi eigenständig gegen ein Verdrücken in Richtung des Medienbehälters 1 gesichert ist, indem das oder die Rastelemente 20 nicht mehr aus dem oder den Rastgegenelementen 21 ausrasten können, da diese von dem Verpressungsabschnitt 10 am Rückfedern gehindert sind bzw. werden. Ein weiterer Vorteil von wenigstens einem Rastelement 20 liegt darin, dass das Rückstellelement 11, 11a bereits auf oder in den Kragen 4 gesteckt werden kann, bevor das Ventilanschlusselement 2 mit dem Medienbehälter 1 verbunden wird (z.B. mittels einer Schraubverbindung und/oder mittels einer Klebstoffschicht), da die Rückstellelemente 20 bei dem Aufsetzen des Ventilanschlusselementes 2 auf den Kragen 4 zurückweichen können und erst in der Endposition des Ventilanschlusselementes 2 in Relation zu dem Medienbehälter 1 in die oder in das Rastgegenelement 21 hinterschnittig verrasten. Das Rastelement 20 ist vorzugsweise einstückig mit dem Rückstellelement 11, 11a ausgebildet, beispielsweise aus diesem mechanisch ausgebildet (z.B. durch Fräsen) oder bereits bei der Herstellung an- oder ausgeformt (z.B. bei der Herstellung des Rückstellelementes 11, 11a im Kunststoff-Spritzgussverfahren). Die Wandstärke K des Kragens 4 ist geringer als die Wandstärke M des angrenzenden Medienbehälters 1. Das Rückstellement 11, 11a wird während des Verpressens zudem gelängt, so dass ein Freiraum F zwischen dem unverpressten Rückstellelement 11, 11a und dem Übergang der geringeren Wandstärke K des Kragens 4 zu der Wandstärke M des angrenzenden Medienbehälters vorgesehen ist. Oberhalb des Kragens 4 und / oder des Rückstellelements 11, 11a ist ein Dichtungselement 15 in Form eines O-Ringes vorgesehen, welches das Ventilanschlusselement 2 gegen das Ventilelement 3 zusätzlich abdichtet. Im und zwischen dem Bereich des Verpressungsabschnitts 10 und dem Teilbereich 9a der Wandung 9 ist jedoch kein separates Dichtungselement vorgesehen. Dieses ist aufgrund des erfindungsgemäßen Aufbaus der Vorrichtung nicht erforderlich. Der Teilbereich 9a der Wandung 9 weist zumindest eine definierte Oberflächenunregelmäßigkeit in Form einer wellenförmigen Struktur auf. Der Medienbehälter 1 ist von einer, vorzugsweise gewickelten oder geflochtenen, Armierungsschicht 17 aus Kohlenstofffasern in einer Duroplastmatrix umgeben.

Den Figuren 2a und 2b ist zu entnehmen, dass das Ventilelement 3 auch mehrteilig aufgebaut sein kann, wobei der Verpressungsabschnitt 10 an einem separaten, in diesem Fall hülsenförmigen, ersten Segment 3a des Ventilelements 3 angeordnet ist. Oberhalb des Kragens 4 und / oder des Rückstellelements 11, 11a ist ebenfalls ein Dichtungselement 15 in Form eines O-Ringes vorgesehen, welches das Ventilanschlusselement 2 gegen das Ventilelement 3 zusätzlich abdichtet. Im und zwischen dem Bereich des Verpressungsabschnitts 10 und dem Teilbereich 9a der Wandung 9 ist jedoch kein separates Dichtungselement vorgesehen. Dieses ist aufgrund des erfindungsgemäßen Aufbaus der Vorrichtung nicht erforderlich. Das vorstehend erwähnte Dichtungselement 15 ist an einem separaten zweiten Segment 3b des Ventilelements 3 angeordnet und kann so leicht ausgetauscht bzw. gewartet werden. Sowohl das erste Segment 3a als auch das zweite Segment 3b des Ventilelements 3 sind mittels einer Verschraubung 16a, 16b mit dem Ventilanschlusselement 2 verbindbar. Hierzu ist oberhalb des Kragens 4 eine erste Verschraubung 16a zwischen dem ersten Segment 3a und dem Ventilanschlusselement 2 und eine zweite Verschraubung 16b zwischen dem zweiten Segment 3b des Ventilelements 3 und dem Ventilanschlusselement 2 vorgesehen. Das erste Segment 3a des Ventilelements 3 weist eine Schlüsselaufnahme für einen Innensechskantschlüssel auf, mittels welchem das erste Segment 3a über die erste Verschraubung 16a mit dem Ventilanschlusselement 2 verbindbar ist. Das zweite Segment 3b des Ventilanschlusselements 3 weist eine Verlängerung der medienführenden Ventildurchführung auf, über welche das Medium über das Ventilanschlusselement 3 bzw. 3b ab- und zugeführt werden kann. Die Verlängerung ist so ausgebildet, dass diese eine durchgehende Ausnehmung des ersten Segments 3a des Ventilanschlusselements 3 durchdringt bzw. durchfasst und im montierten Zustand der Vorrichtung soweit in den Medienbehälter 1 hineinragt, dass eine thermische Belastung der Vorrichtung, insbesondere bei der Betankung des Medienbehälters 1, verringert ist. Hierzu ragt die Verlängerung über das erste Segment 3a hinaus in den Medienbehälter 1 hinein. Vorzugsweise ist im montierten Zustand der Vorrichtung das untere in den Medienbehälter hineinragende, Ende der Verlängerung mindestens mit einem Abstand größer oder gleich des Außendurchmessers D des Verpressungsabschnitts 10 des ersten Segments 3a des Ventilanschlusselements 3 von dem ersten Segment 3a beabstandet.

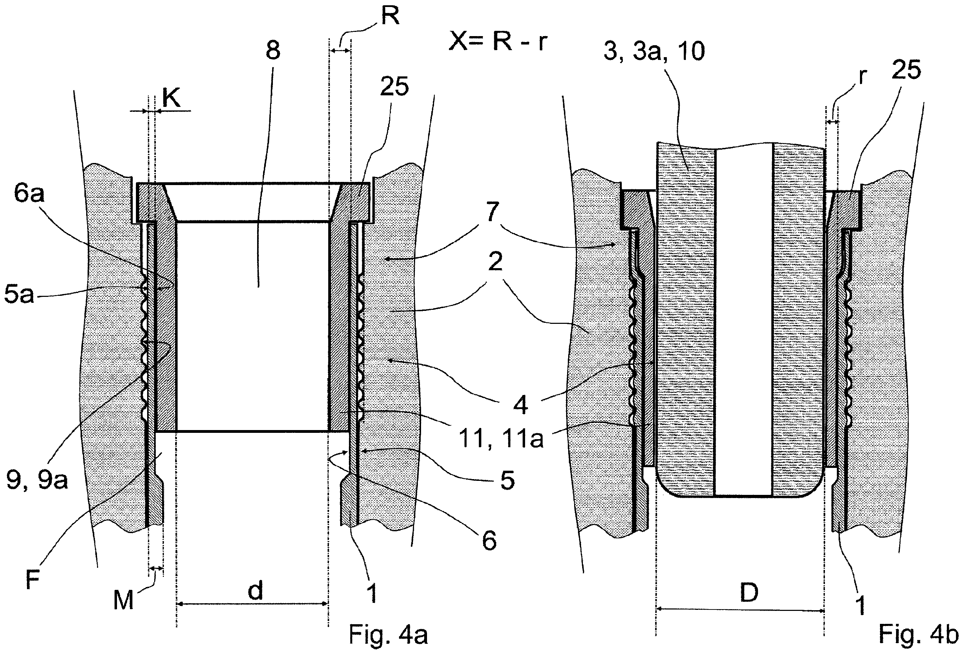

Den Figuren 4a und 4b ist eine weitere Detaildarstellung einer erfindungsgemäßen Vorrichtung zu entnehmen. Das Rückstellelement 11a und der Kragen 4 sind hierbei ebenfalls hülsenförmig ausgebildet und ineinandergesteckt und der Verpressungsabschnitt 10 von dem Rückstellelement 11a und dem Kragen 4 umschlossen. Der Außendurchmesser D (vgl. Fig. 4b) des Verpressungsabschnittes 10 vor der Montage des Ventilelements 3, 3a ist größer als der Innendurchmesser d (vgl. Fig. 4a) des Kragens 4 und / oder des Rückstellelementes 11a vor der Montage des Ventilelements 3, 3a. Der Quotient (D-d) / d aus der Differenz (D-d) des Außendurchmessers D des Verpressungsabschnitts 10 und des Innendurchmessers d des Kragens 4 und / oder des Rückstellelementes 11a vor der Montage des Ventilelements 3, 3a in Bezug zu (=Division durch) dem Innendurchmesser d des Kragens 4 und / oder des Rückstellelementes 11a vor der Montage des Ventilelements 3, 3a liegt in einem Bereich zwischen 0,001 und 0,3, vorzugsweise zwischen 0,01 und 0,2, weiter vorzugsweise zwischen 0,08 und 0,15, weiter vorzugsweise zwischen 0,1 und 0,12. Das Rückstellelement 11, 11a ist aus einem vernetzten Kunststoffmaterial gebildet. Der Verpressungsabschnitt 10, der Kragen 4 und das Rückstellelement 11, 11a sind so aufeinander abgestimmt und ausgebildet, dass durch die gemeinsame Verpressung von Kragen 4 und Rückstellelement 11, 11a eine elastische Deformation X (entspricht der Differenz der Wandstärke R im Vergleich zu der Wandstärke r des Rückstellelements nach der Montage des Ventilanschlusselements 2) einstellbar ist, die größer ist als die maximale Kriechverformung Y des Kragens 4 über die Einsatzdauer der Vorrichtung, so dass die Kriechverformung Y des Kragens 4 über das Rückstellelement 11, 11a ausgleichbar ist und zwischen dem Verpressungsabschnitt 10, dem Kragen 4, dem Rückstellelement 11, 11a und dem Teilbereich 9a der Wandung 9 ein dauerhafter Presssitz entsteht, der gegen das unter Druck stehende Medium abdichtet. Die elastische Deformation X entspricht hierbei wenigstens dem 0,3-fachen, vorzugsweise wenigstens 0,5-fachen, weiter vorzugsweise wenigstens 0,8-fachen, weiter vorzugsweise wenigstens 1,0-fachen, besonders bevorzugt wenigstens 1,2-fachen der Wandstärke K des Kragens 4 vor der Montage des Ventilelements 3, 3a, 3b. Das hülsenförmige Rückstellelement 11, 11a weist an seinem, dem Medienbehälter 1 abgewandten, Ende einen seitlich abstehenden Bund 25 auf, der abschnittsweise oder umlaufend an dem Rückstellelement 11, 11a angeordnet, insbesondere einstückig angeformt, ist. Der Bund 25 wechselwirkt dabei mit einem stufenförmigen Hinterschnitt innerhalb der Wandung 9 des Ventilanschlusselementes 2 und verhindert so, dass bei der Montage des Ventilelementes 3, 3a das Rückstellelement 11, 11a und/oder der Kragen 4 in Richtung des Medienbehälters 1 verdrückt wird bzw. in den Medienbehälter 1 hineingedrückt wird. Das Rückstellelement 11, 11a wird nach dem Verbinden des Medienbehälters 1 mit dem Ventilanschlusselement 2 in oder auf den Kragen 4 gesteckt.

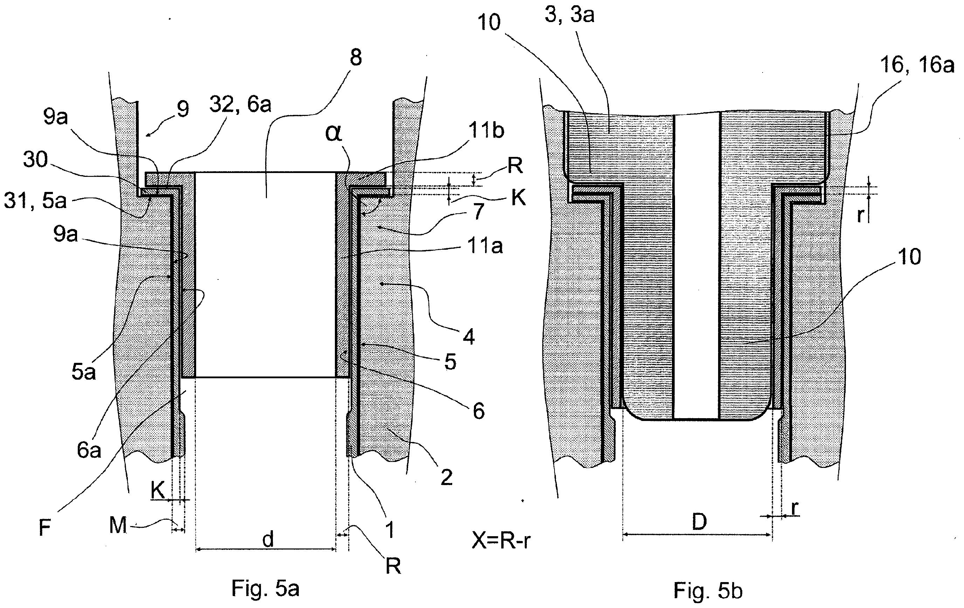

Die Fig. 5a und 5b zeigt eine Detaildarstellung einer weiteren Ausführungsform einer erfindungsgemäßen Vorrichtung, wobei das Rückstellelement 11b scheibenförmig ausgebildet ist und, wobei an dem oberen Ende 7 des Kragens 4 ein die Öffnung 8 umrahmender, mit dem Kragen 4 ein Winkel α im Bereich von 80°-100° einschließender, Flansch 30 angeformt ist, wobei die Flanschunterseite 31 den Teilbereich 5a der Kragenaußenwandung 5 und die Flanschoberseite 32 den Teilbereich 6a der Krageninnenwandung 6 bildet.

Wie in Fig. 5b dargestellt, erfolgt die gemeinsame Verpressung von Kragen 4 und Rückstellelement 11b durch die Montage des Ventilelements 3, 3a, wobei der Flansch 30 des Kragens 4 und das Rückstellelement 11b zwischen einem ersten Teilbereich 9a der Wandung 9 und einem ersten Verpressungsabschnitt 10 gemeinsam verpresst werden. Zusätzlich ist das scheibenförmig ausgebildete Rückstellelement 11b einstückig mit einem hülsenförmig ausgebildeten Rückstellelement 11a verbunden. Neben einer weiter verbesserten Dichtheit eines derartig kombinierten Rückstellelements 11a, 11b wird durch den gebildeten Hinterschnitt zwischen dem hülsenförmigen und dem scheibenförmigen Rückstellelement 11a, 11b bei der Montage des Ventilelements 3, 3a wirksam verhindert, dass der Verpressungsabschnitt 10 bzw. das Ventilelement 3, 3a das Rückstellelement 11a, 11b und/oder den Kragen 4 verdrückt oder in den Medienbehälter 1 hinausschiebt. Die elastische Deformation X entspricht hierbei jeweils wenigstens dem 0,3-fachen, vorzugsweise wenigstens 0,5-fachen, weiter vorzugsweise wenigstens 0,8-fachen, weiter vorzugsweise wenigstens 1,0-fachen, besonders bevorzugt wenigstens 1,2-fachen der Wandstärke K des Kragens 4 vor der Montage des Ventilelements 3, 3a. Das Ventilanschlusselement 2 kann für diese Ausführungsform derart zwei- oder mehrteilig aufgebaut sein, dass das Ventilanschlusselement 2 um den Kragen 4 bzw. den Flansch 30 herum montiert werden kann. Alternativ kann der Flansch 30 auch erst nach dem Verbinden von Ventilanschlusselement 2 und Medienbehälter 1 geformt werden (beispielsweise durch ein Umformwerkzeug aus einem Bereich des Kragens 4).

Ein Verfahren zur Montage einer in den Fig. 1a bis 5b dargestellten Vorrichtungen zur Speicherung und Abgabe von flüssigen und / oder gasförmigen Medien unter Druck umfasst die Schritte des Bereitstellens eines in einem Formgebungsverfahren, vorzugsweise einem Blasformungsverfahren, hergestellten Medienbehälters 1, dem Anordnen des Ventilanschlusselements 2 an den Medienbehälter 1, dem Montieren des Ventilelements 3, 3a, wobei der Kragen 4 und das Rückstellelement 11, 11a, 11b zwischen dem Teilbereich 9a der Wandung 9 und dem Verpressungsabschnitt 10 gemeinsam verpresst werden, dem Fortführen der Montage des Ventilelements 3, 3a, bis die gemeinsame Verpressung von Kragen 4 und Rückstellelement 11, 11a, 11b zu einer Deformation X des Rückstellelements 11, 11a, 11b geführt hat, die größer ist als die maximale Kriechverformung Y des Kragens 4 über die Einsatzdauer der Vorrichtung, so dass die Kriechverformung Y des Kragens 4 über das Rückstellelement 11, 11a, 11b ausgeglichen wird und zwischen dem Verpressungsabschnitt 10, dem Kragen 4, dem Rückstellelement 11, 11a, 11b und dem Teilbereich 9a der Wandung 9 ein dauerhafter Presssitz entsteht. Der Presssitz ermöglicht eine Abdichtung der jeweiligen Dichtungsbereiche gegen das unter Druck stehende Medium. Die elastische Deformation X entspricht hierbei wenigstens dem 0,3-fachen, vorzugsweise wenigstens 0,5-fachen, weiter vorzugsweise wenigstens 0,8-fachen, weiter vorzugsweise wenigstens 1,0-fachen, besonders bevorzugt wenigstens 1,2-fachen der Wandstärke K des Kragens 4 vor der Montage des Ventilelements 3, 3a.

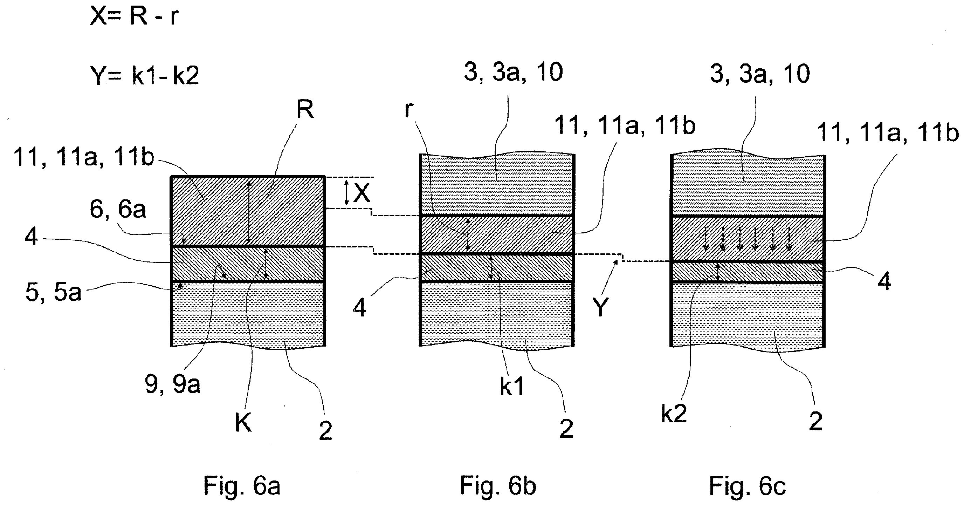

Den Figuren 6a bis 6c ist eine schematische Darstellung der Vorteile der erfindungsgemäßen Vorrichtung zu entnehmen. Fig. 6a zeigt hierbei den Zustand der Vorrichtung vor der Montage bzw. vor dem Verbinden des Ventilelementes 3, 3a mit dem Ventilanschlusselement 2. Ein Teilbereich 5a der Kragenaußenwandung 5 ist einem Teilbereich 9a einer Wandung 9 des Ventilanschlusselements 2 gegenüberliegend angeordnet, wobei das Ventilelement 3, 3a einen Verpressungsabschnitt 10 aufweist, der im Montagezustand der Vorrichtung (vgl. Fig. 6b und 6c) einem Teilbereich 6a der Krageninnenwandung 6 gegenüberliegt. Zwischen dem Teilbereich 9a der Wandung 9 und dem Verpressungsabschnitt 10 ist zusätzlich ein Rückstellelement 11, 11a, 11b derart angeordnet, dass bei der Montage des Ventilelements 3, 3a, der Kragen 4 und das Rückstellelement 11, 11a, 11b zwischen dem Teilbereich 9a der Wandung 9 und dem Verpressungsabschnitt 10 gemeinsam verpresst werden (vgl. Fig. 6b und 6c). Das Rückstellelement 11, 11a, 11b ist aus einem vernetzten Kunststoffmaterial, vorzugsweise aus vernetztem Polyethylen gebildet. Der Verpressungsabschnitt 10, der Kragen 4 und das Rückstellelement 11, 11a, 11b sind so aufeinander abgestimmt und ausgebildet, dass durch die gemeinsame Verpressung von Kragen 4 und Rückstellelement 11, 11a, 11b eine elastische Deformation X des Rückstellelements 11, 11a, 11b einstellbar ist, die größer ist als die maximale Kriechverformung Y des Kragens 4 über die Einsatzdauer der Vorrichtung. Die elastische Deformation X entspricht hierbei wenigstens dem 0,3-fachen, vorzugsweise wenigstens 0,5-fachen, weiter vorzugsweise wenigstens 0,8-fachen, weiter vorzugsweise wenigstens 1,0-fachen, besonders bevorzugt wenigstens 1,2-fachen der Wandstärke K des Kragens 4 vor der Montage des Ventilelements 3, 3a. Die hierdurch zu kompensierende Kriechverformung Y ergibt sich aus der Differenz der Wandstärke k1 und der Wandstärke k2 bei Erreichen der maximalen Kriechverformung bzw. in einem Zwischenstadium zwischen der anfänglichen Verformung im Zustand der rein elastischen Verformung des Kragens 4 (entspricht Wandstärke k1) und der Wandstärke k2 während der Kriechverformung oder bei der maximalen Kriechverformung Y. Die Kriechverformung Y des Kragens 4 ist über das Rückstellelement 11, 11a, 11b ausgleichbar, so dass zwischen dem Verpressungsabschnitt 10, dem Kragen 4, dem Rückstellelement 11, 11a, 11b und dem Teilbereich 9a der Wandung 9 ein dauerhafter Presssitz entsteht. Der Presssitz ermöglicht eine Abdichtung der jeweiligen Dichtungsbereiche gegen das unter Druck stehende Medium. Die Wandstärke R des Rückstellelements 11, 11a, 11b ist hierbei wenigstens 1,8-fach größer als die Wandstärke K des Kragens 4 vor der Montage des Ventilelements 3, 3a. Das Rückfedern bzw. das Ausgleichen der Kriechverformung Y des Kragens 4 über das elastische Zurückfedern des Rückstellelements 11, 11a, 11b ist in Fig. 6c durch die gestrichelten Pfeile schematisch angedeutet.

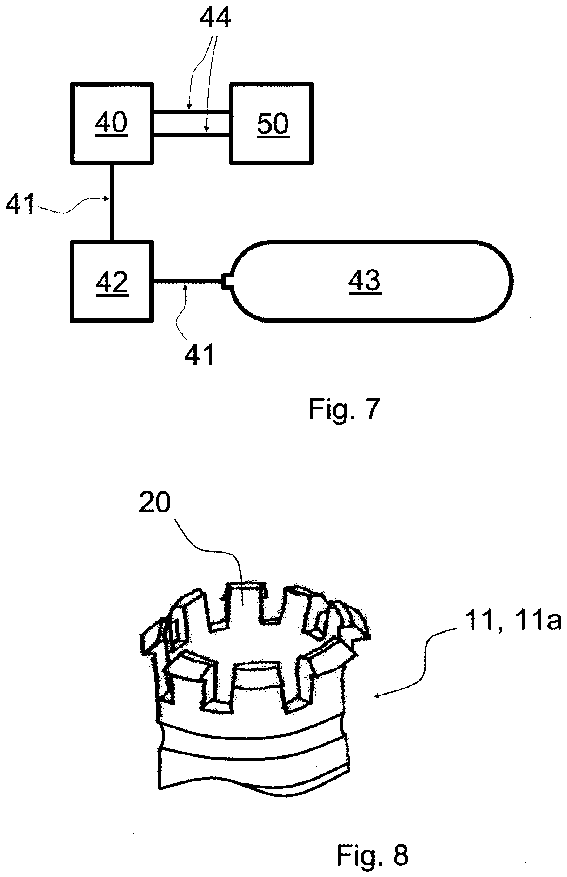

Die Fig. 7 zeigt eine erfindungsgemäße Kraftstoff-Energieumwandlungsvorrichtung mit einer Brennstoffzelleneinheit 40, einer Medienverbindungsleitung 41, einem Druckminderer 42 und einer erfindungsgemäßen Vorrichtung 43. Die Medienverbindungsleitung 41 verbindet die Vorrichtung 43 mediengleitend mit der Brennstoffzelleneinheit 40. Über die Medienverbindungsleitung 41 kann das in der erfindungsgemäßen Vorrichtung 43 gespeicherte Medium, hier Wasserstoff, zur Brennstoffzelle 40 fließen. Da das unter Druck stehende Medium innerhalb der erfindungsgemäßen Vorrichtung 43 unter einem stark erhöhten Druck (in diesem Ausführungsbeispiel Wasserstoff mit 750 bar) steht, ist in Medienflussrichtung vor der Brennstoffzelleneinheit 40 ein Druckminderer 42 angeordnet. Die in der Brennstoffzelle 40 aus dem Kraftstoff, in diesem Fall aus dem Wasserstoff, umgewandelte elektrische Energie wird über elektrische Verbindungsleitungen 44 einem elektrischen Verbraucher 50 (z.B. einem Elektromotor) oder einem Energiespeicher 50 (z.B. einer Traktionsbatterie) zugeführt.

Die Fig. 8 zeigt die in den Figuren 1a bis 3b dargestellten Rückstellelemente 11, 11a, die eine Vielzahl von Rastelementen 20 aufweisen, die entsprechend mit einem an der Innenwandung 9 des Ventilanschlusselements 2 ausgebildeten Rastgegenelement 21 derart zusammenwirken, dass bei der Montage des Ventilelements 3, 3a eine Verschiebung des Rückstellelements 11, 11a relativ zu dem Ventilanschlusselement 2 und / oder dem Kragen 4 behindert ist. Die Rastelemente 20 sind hierbei einstückig mit dem Rückstellelement 11, 11a ausgebildet.

## Patentansprüche

1. Vorrichtung zur Speicherung und Abgabe von flüssigen und/oder gasförmigen Medien unter Druck aufweisend:
- einen das Medium aufnehmenden Medienbehälter (1) aus einem Kunststoffmaterial, vorzugsweise aus Polyamid,
- mindestens ein mit dem Medienbehälter (1) verbundenes Ventilanschlusselement (2),
- mindestens ein mit dem Ventilanschlusselement (2) verbindbares Ventilelement (3, 3a, 3b),
wobei der Medienbehälter (1) einen einstückig angeformten und von dem Medienbehälter (1) abstehenden Kragen (4) mit einer Kragenaußenwandung (5) und einer Krageninnenwandung (6) aufweist,
wobei das Ende (7) des Kragens (4) den freien Querschnitt einer Öffnung (8) des Medienbehälters (1) definiert,
wobei das Ventilanschlusselement (2) im Bereich dieser Öffnung (8) angeordnet ist und ein Teilbereich (5a) der Kragenaußenwandung (5) einem Teilbereich (9a) einer Wandung (9) des Ventilanschlusselementes (2) gegenüberliegend angeordnet ist, und
wobei das Ventilelement (3, 3a) einen Verpressungsabschnitt (10) aufweist, der im Montagezustand der Vorrichtung einem Teilbereich (6a) der Krageninnenwandung (6) gegenüberliegt,
wobei zwischen dem Teilbereich (9a) der Wandung (9) und dem Verpressungsabschnitt (10) zusätzlich wenigstens ein Rückstellelement (11, 11a, 11b) derart angeordnet ist, dass bei der Montage des Ventilelementes (3, 3a) der Kragen (4) und das Rückstellelement (11, 11a, 11b) zwischen dem Teilbereich (9a) der Wandung (9) und dem Verpressungsabschnitt (10) gemeinsam verpresst werden,
wobei das Rückstellelement (11, 11a, 11b) aus einem vernetzten Kunststoffmaterial, vorzugsweise aus vernetztem Polyethylen, gebildet ist und,
wobei der Verpressungsabschnitt (10), der Kragen (4) und das Rückstellelement (11, 11a, 11b) so aufeinander abgestimmt und ausgebildet sind, dass durch die gemeinsame Verpressung von Kragen (4) und Rückstellelement (11, 11a, 11b) eine elastische Deformation (X) des Rückstellelements (11, 11a, 11b) einstellbar ist, die größer ist als die maximale Kriechverformung (Y) des Kragens (4) über die Einsatzdauer der Vorrichtung,
so dass die Kriechverformung (Y) des Kragens (4) über das Rückstellelement (11, 11a, 11b) ausgleichbar ist und zwischen dem Verpressungsabschnitt (10), dem Kragen (4), dem Rückstellelement (11, 11a, 11b) und dem Teilbereich (9a) der Wandung (9) ein dauerhafter Presssitz entsteht,
**dadurch gekennzeichnet, dass**
das Rückstellelement (11a) und der Kragen (4) hülsenförmig ausgebildet und ineinandergesteckt oder aufeinandergesteckt sind, und der Verpressungsabschnitt (10) von dem Rückstellelement (11a) und dem Kragen (4) umschlossen wird, wobei der Außendurchmesser (D) des Verpressungsabschnittes (10) vor der Montage des Ventilelements (3, 3a) größer als der Innendurchmesser (d) des Kragens (4) und/oder des Rückstellelementes (11a) ist.

2. Vorrichtung nach Anspruch 1, **dadurch gekennzeichnet, dass** die elastische Deformation (X) wenigstens dem 0,3-fachen, vorzugsweise wenigstens 0,8-fachen, der Wandstärke (K) des Kragens (4) entspricht.

3. Vorrichtung nach Anspruch 1 oder 2, **dadurch gekennzeichnet, dass** die Wandstärke (R) des Rückstellelementes (11, 11a, 11b) wenigstens 1,5-fach größer als die Wandstärke (K) des Kragens (4) ist.

4. Vorrichtung nach einem der vorstehenden Ansprüche, **dadurch gekennzeichnet, dass** das Rückstellelement (11, 11a, 11b) mindestens eine, durch Ausformungen oder Ausnehmungen gebildete, definierte Oberflächenunregelmäßigkeit auf oder in der Oberfläche des Rückstellelementes (11, 11a, 11b) aufweist.

5. Vorrichtung nach Anspruch 4, **dadurch gekennzeichnet, dass** die definierte Oberflächenunregelmäßigkeit durch ein im Längs- und/oder Querschnitt wellenförmiges Rückstellelement (11, 11a, 11b) gebildet ist.

6. Vorrichtung nach Anspruch 5, **dadurch gekennzeichnet, dass** das Rückstellelement (11, 11a, 11b) eine konstante Wandstärke (R) aufweist.

7. Vorrichtung nach einem der vorstehenden Ansprüche, **dadurch gekennzeichnet, dass** an dem Rückstellelement (11, 11a) mindestens ein Rastelement (20) angeordnet ist, das mit einem an der Innenwandung (9) des Ventilanschlusselements (2) ausgebildeten Rastgegenelement (21) derart zusammenwirkt, dass bei der Montage des Ventilelements (3, 3a) eine Verschiebung des Rückstellelementes (11, 11a) relativ zu dem Ventilanschlusselement (2) und/oder dem Kragen (4) behindert ist.

8. Vorrichtung nach einem der vorstehenden Ansprüche, **dadurch gekennzeichnet, dass** die Wandstärke (K) des Kragens (4) geringer ist als die Wandstärke (M) des angrenzenden Medienbehälters (1).

9. Vorrichtung nach einem der vorstehenden Ansprüche, **dadurch gekennzeichnet, dass** das Ventilelement (3) mehrteilig aufgebaut ist, wobei der Verpressungsabschnitt (10) an einem separaten, ersten Segment (3a) des Ventilelements (3) angeordnet ist.

10. Vorrichtung nach Anspruch 9, **dadurch gekennzeichnet, dass** das erste Segment (3a) hülsenförmig ist.

11. Vorrichtung nach einem der vorstehenden Ansprüche, **dadurch gekennzeichnet, dass** oberhalb des Kragens (4) und/oder des Rückstellelementes (11, 11a, 11b) ein Dichtungselement (15), vorzugsweise ein O-Ring (15) vorgesehen ist, welches das Ventilanschlusselement (2) gegen das Ventilelement (3) abdichtet.

12. Vorrichtung nach Anspruch 9 und 11 oder 10 und 11, **dadurch gekennzeichnet, dass** das Dichtungselement (15) an einem separaten zweiten Segment (3b) des Ventilelements (3) angeordnet ist.

13. Vorrichtung nach einem der vorstehenden Ansprüche, **dadurch gekennzeichnet, dass** im und zwischen dem Bereich des Verpressungsabschnittes (10) und dem Teilbereich (9a) der Wandung (9) kein separates Dichtungselement vorgesehen ist.

14. Vorrichtung nach einem der vorstehenden Ansprüche, **dadurch gekennzeichnet, dass** oberhalb des Kragens (4) eine Verschraubung (16, 16a, 16b) zwischen dem Ventilelement (3, 3a, 3b) und dem Ventilanschlusselement (2) vorgesehen ist.

15. Vorrichtung nach einem der vorstehenden Ansprüche, **dadurch gekennzeichnet, dass** der Teilbereich (9a) der Wandung (9) mindestens eine definierte Oberflächenunregelmäßigkeit aufweist.

16. Vorrichtung nach einem der vorstehenden Ansprüche, **dadurch gekennzeichnet, dass** der Medienbehälter (1) von einer, vorzugsweise gewickelten oder geflochtenen, Armierungsschicht (17) umgeben ist.

17. Kraftstoffenergieumwandlungsvorrichtung mit
- einer Brennstoffzelleneinheit (40),
- mindestens einer Medien-Verbindungsleitung (41),
- mindestens einem Druckminderer (42) und
- mindestens einer Vorrichtung (43) nach einem der vorstehenden Ansprüche 1 bis 16,
wobei die Medien-Verbindungsleitung (41) die Vorrichtung (43) mit der Brennstoffzelleneinheit (40) medienleitend verbindet und der Druckminderer (42) in Medienflussrichtung vor der Brennstoffzelleneinheit (40) angeordnet ist.

18. Kraftfahrzeug mit einer Vorrichtung nach einem der vorstehenden Ansprüche 1 bis 16 oder mit einer Kraftstoffenergieumwandlungsvorrichtung nach Anspruch 17.

19. Verfahren zur Montage einer Vorrichtung zur Speicherung und Abgabe von flüssigen und/oder gasförmigen Medien unter Druck nach einem der Ansprüche 1 bis 16, umfassend die folgenden Schritte:
- Bereitstellen eines in einem Formgebungsverfahren, vorzugsweise einem Blasformungsverfahren, hergestellten Medienbehälters (1),
- Anordnen des Ventilanschlusselements (2) an dem Medienbehälter (1),
- Montieren des Ventilelementes (3, 3a), wobei der Kragen (4) und das Rückstellelement (11, 11a, 11b) zwischen dem Teilbereich (9a) der Wandung (9) und dem Verpressungsabschnitt (10) gemeinsam verpresst werden,
- Fortführen der Montage des Ventilelementes (3, 3a) bis die gemeinsame Verpressung von Kragen (4) und Rückstellelement (11, 11a, 11b) zu einer Deformation (X) des Rückstellelements (11, 11a, 11b) geführt hat, die größer ist als die maximale Kriechverformung (Y) des Kragens (4) über die Einsatzdauer der Vorrichtung,
so dass die Kriechverformung (Y) des Kragens (4) über das Rückstellelement (11, 11a, 11b) ausgeglichen wird und zwischen dem Verpressungsabschnitt (10), dem Kragen (4), dem Rückstellelement (11, 11a, 11b) und dem Teilbereich (9a) der Wandung (9) ein dauerhafter Presssitz entsteht,
**dadurch gekennzeichnet, dass**
das Rückstellelement (11a) und der Kragen (4) hülsenförmig ausgebildet und ineinandergesteckt oder aufeinandergesteckt sind, und der Verpressungsabschnitt (10) von dem Rückstellelement (11a) und dem Kragen (4) umschlossen wird, wobei der Außendurchmesser (D) des Verpressungsabschnittes (10) vor der Montage des Ventilelements (3, 3a) größer als der Innendurchmesser (d) des Kragens (4) und/oder des Rückstellelementes (11a) ist.

## Claims

1. Device for storage and delivery of a liquid and/or gaseous medium under pressure comprising:
a medium-holding medium container (1) made of a plastic material, preferably polyamide,
at least a valve connecting element (2) connected with the medium container (1),
at least a valve element (3, 3a, 3b) that can be connected with the valve connecting element (2),
wherein the medium container (1) is integrally formed with a collar (4) protruding from the medium container (1) and having a collar outer wall (5) and a collar inner wall (6),
wherein the end (7) of the collar (4) defines the free cross-section of an opening
(8) of the medium container (1),
wherein the valve connecting element (2) is arranged in the area of this opening (8), while a section (5a) of the collar outer wall (5) is arranged opposite a section (9a) of a wall (9) of the valve connecting element (2), and
wherein the valve element (3, 3a) has a pressing section (10) which lies opposite a section (6a) of the collar inner wall (6) in the assembled state of the device,
wherein between the section (9a) of the wall (9) and the pressing section (10), there is, in addition, at least a restoring element (11, 11a, 11b) that is so arranged that, upon assembly of the valve element (3, 3a), the collar (4) and the restoring element (11, 11a, 11b) are pressed together between the section (9a) of the wall (9) and the pressing section (10),
wherein the restoring element (11, 11a, 11b) is made of a cross-linked plastic material, preferably cross-linked polyethylene, and
wherein the pressing section (10), the collar (4) and the restoring element (11, 11a, 11b) are so matched and formed that the joint pressing of the collar (4) and the restoring element (11, 11a, 11b) causes an elastic deformation (X) of the restoring element (11, 11a, 11b), which is larger than the maximum creep deformation (Y) of the collar (4) over the service life of the device,
so that the creep deformation (Y) of the collar (4) is compensated by the restoring element (11, 11a, 11b) and a permanent press fit is created between the pressing section (10), the collar (4), the restoring element (11, 11a, 11b) and the section (9a) of the wall (9),
**characterised in that**
the restoring element (11a) and the collar (4) are sleeve-shaped and plugged into or plugged onto one another, and the pressing section (10) is enclosed by the restoring element (11a) and the collar (4), wherein the outer diameter (D) of the pressing section (10) is larger than the inner diameter (d) of the collar (4) and/or the restoring element (11a) before assembly of the valve element (3, 3a).

2. Device according to claim 1, **characterised in that** the elastic deformation (X) corresponds to at least 0,3 times, preferably at least 0,8 times, the wall thickness (K) of the collar (4).

3. Device according to claim 1 or 2, **characterised in that** the wall thickness (R) of the restoring element (11, 11a, 11b) is at least 1,5 times greater than the wall- thickness (K) of the collar (4).

4. Device according to one of the preceding claims, **characterised in that** the restoring element (11, 11a, 11b) has at least one defined surface irregularity on or in the surface of the restoring element (11, 11a, 11b), formed in particular by protrusions or recesses.

5. Device according to claim 4, **characterised in that** the defined surface irregularity is formed by a waveform-shaped longitudinal and/or cross-sectional restoring element (11, 11a, 11b),

6. Device according to claim 5, **characterised in that** the said restoring element (11, 11a, 11b) has a constant wall thickness (R).

7. Device according to one of the preceding claims, **characterised in that** at least one latching element (20) is arranged on the restoring element (11, 11a), and so interacts with a counterpart latching element (21) on the inner wall (9) of the valve connecting element (2) that during assembly of the valve element (3, 3a), displacement of the restoring element (11, 11a) relative to the valve connecting element (2) and/or the collar (4), is prevented.

8. Device according to one of the preceding claims, **characterised in that** the wall thickness (K) of the collar (4) is less than the wall thickness (M) of the adjacent medium container (1).

9. Device according to one of the preceding claims, **characterised in that** the valve element (3) is constructed in several parts, wherein the pressing section (10) is arranged on a separate first segment (3a) of the valve element (3).

10. Device according to claim 9, **characterised in that** the first segment (3a) is sleeve-shaped.

11. Device according to one of the preceding claims, **characterised in that** a sealing element (15), preferably an O-ring (15), is provided above the collar (4) and/or the restoring element (11, 11a, 11b) to seal the valve connecting element (2) against the valve element (3).

12. Device according to claim 9 and 11 or 10 and 11, **characterised in that** the sealing element (15) is arranged on a separate second segment (3b) of the valve element (3).

13. Device according to one of the preceding claims, **characterised in that** no separate sealing member is provided in the area of and between the pressing section (10) and the section (9a) of the wall (9).

14. Device according to one of the preceding claims, **characterised in that** a screw (16, 16a, 16b) is provided above the collar (4) between the valve element (3, 3a, 3b) and the valve connecting element (2).

15. Device according to one of the preceding claims, **characterised in that** the section (9a) of the wall (9) has at least one defined surface irregularity.

16. Device according to one of the preceding claims, **characterised in that** the medium container (1) is surrounded by a, preferably wound or braided, reinforcement layer (17).

17. Fuel energy conversion device comprising
- a fuel cell unit (40),
- at least a medium connecting line (41),
- at least a pressure reducer (42), and
- at least a device (43) according to one of the preceding claims 1 to 16,
wherein the medium connecting line (41) connects the device (43) with the fuel cell unit (40), and the pressure reducer (42) is arranged in the medium flow direction upstream of the fuel cell unit (40).

18. Motor vehicle with a device according to one of the preceding claims 1 to 16 or with a fuel energy conversion device according to claim 17.

19. Method for assembling a device for the storage and delivery of a liquid and/or gaseous medium under pressure according to one of claims 1 to 16, comprising the following steps:
- production of a medium container through a shaping process, preferably a blow moulding method (1),
- arranging the valve connecting element (2) on the medium container (1),
- assembling the valve element (3, 3a), wherein the collar (4) and the restoring element (11, 11a, 11b) are pressed together between the section (9a) of the wall (9) and the pressing section (10),
- continuing the assembly of the valve element (3, 3a) to the joint pressing by the collar (4) and the restoring element (11, 11a, 11b) leading to a deformation (X) of the restoring element (11, 11a, 11b), which is greater than the maximum creep deformation (Y) of the collar (4) over the service life of the device,
so that the creep deformation (Y) of the collar (4) is compensated by the restoring element (11, 11a, 11b) and a permanent press fit is created between the pressing section (10), the collar (4), the restoring element (11, 11a, 11b) and the section (9a) of the wall (9),
**characterised in that**
the restoring element (11a) and the collar (4) are sleeve-shaped and plugged into or plugged onto one another, and the pressing section (10) is enclosed by the restoring element (11a) and the collar (4), wherein the outer diameter (D) of the pressing section (10) is larger than the inner diameter (d) of the collar (4) and/or the restoring element (11a) before assembly of the valve element (3, 3a).

## Revendications

1. Dispositif de stockage et de distribution de fluides liquides et/ou gazeux sous pression, présentant :
- un réservoir de fluide (1) réceptionnant le fluide, constitué d'une matière plastique, de préférence constitué de polyamide,
- au moins un élément de raccordement de vanne (2) relié au réservoir de fluide (1),
- au moins un élément de vanne (3, 3a, 3b) pouvant être relié à l'élément de raccordement de vanne (2),
le réservoir de fluide (1) présentant un col (4) formé d'une seule pièce et faisant saillie du réservoir de fluide (1), muni d'une paroi extérieure (5) de col et d'une paroi intérieure (6) de col,
l'extrémité (7) du col (4) définissant la section libre d'une ouverture (8) du réservoir de fluide (1),
l'élément de raccordement de vanne (2) étant disposé au niveau de cette ouverture (8), et une zone partielle (5a) de la paroi extérieure (5) de col étant disposée à l'opposé d'une paroi (9) de l'élément de raccordement de vanne (2), et
l'élément de vanne (3, 3a) présentant une section de pression (10) qui, à l'état de montage du dispositif, est située à l'opposé d'une zone partielle (6a) de la paroi intérieure (6) de col,
au moins un élément de rappel (11, 11a, 11b) étant en plus disposé entre la zone partielle (9a) et la section de pression (10) de manière à ce que lors du montage de
l'élément de vanne (3, 3a), le col (4) et l'élément de rappel (11, 11a, 11b) soient pressés en commun entre la zone partielle (9a) de la paroi (9) et la section de pression (10),
l'élément de rappel (11, 11a, 11b) étant réalisé à partir d'une matière plastique réticulée, de préférence en polyéthylène réticulé, et
la section de pression (10), le col (4) et l'élément de rappel (11, 11a, 11b) étant adaptés les uns aux autres et réalisés de manière à ce qu'en raison de la pression commune du col (4) et de l'élément de rappel (11, 11a, 11b) une déformation élastique (X) de l'élément de rappel (11, 11a, 11b) soit réglable, laquelle est supérieure à la déformation de fluage maximale (Y) du col (4) pendant la durée d'utilisation du dispositif,
de sorte que la déformation de fluage (Y) du col (4) est compensable par l'intermédiaire de l'élément de rappel (11, 11a, 11b) et qu'un siège de pression durable est obtenu entre la section de pression (10), le col (4), l'élément de rappel (11, 11a, 11b) et la zone partielle (9a) de la paroi (9),
**caractérisé en ce que**
l'élément de rappel (11a) et le col (4) sont réalisés en forme de douille et sont emboîtés l'un dans l'autre ou enfoncés l'un sur l'autre, et **en ce que** la section de pression (10) est entourée par l'élément de rappel (11a) et le col (4), le diamètre extérieur (D) de la section de pression (10), avant le montage de l'élément de vanne (3, 3a), étant supérieur au diamètre intérieur (d) du col (4) et/ou de l'élément de rappel (11a).

2. Dispositif selon la revendication 1, **caractérisé en ce que** la déformation élastique (X) correspond au moins à 0,3 fois, de préférence au moins à 0,8 fois l'épaisseur de paroi (K) du col (4).

3. Dispositif selon la revendication 1 ou 2, **caractérisé en ce que** l'épaisseur de paroi (R) de l'élément de rappel (11, 11a, 11b) est au moins 1,5 fois supérieure à l'épaisseur de paroi (K) du col (4).

4. Dispositif selon l'une quelconque des revendications précédentes, **caractérisé en ce que** l'élément de rappel (11, 11a, 11b) présente au moins une régularité de surface définie, formée par déformations ou évidements sur ou dans la surface de l'élément de rappel (11, 11a, 11b).

5. Dispositif selon la revendication 4, **caractérisé en ce que** la régularité de surface définie est formée par un élément de rappel (11, 11a, 11b) ondulé en section longitudinale et/ou transversale.

6. Dispositif selon la revendication 5, **caractérisé en ce que** l'élément de rappel (11, 11a, 11b) présente une épaisseur de paroi (R) constante.

7. Dispositif selon l'une quelconque des revendications précédentes, **caractérisé en ce qu'**au moins un élément d'encliquetage (20) est disposé sur l'élément de rappel (11, 11a), lequel élément d'encliquetage coopère avec un contre-élément d'encliquetage (21) réalisé sur la paroi intérieure (9) de l'élément de raccordement de vanne (2) de manière à ce que lors du montage de l'élément de vanne (3, 3a), un déplacement de l'élément de rappel (11, 11a) par rapport à l'élément de raccordement de vanne (2) et/ou au col (4) soit empêché.

8. Dispositif selon l'une quelconque des revendications précédentes, **caractérisé en ce que** l'épaisseur de paroi (K) du col (4) est inférieure à l'épaisseur de paroi (M) du réservoir de fluide (1) adjacent.

9. Dispositif selon l'une quelconque des revendications précédentes, **caractérisé en ce que** l'élément de vanne (3) est construit en plusieurs parties, la section de pression (10) étant disposée sur un premier segment (3a) séparé de l'élément de vanne (3).

10. Dispositif selon la revendication 9, **caractérisé en ce que** le premier segment (3a) est en forme de douille.

11. Dispositif selon l'une quelconque des revendications précédentes, **caractérisé en ce qu'**un élément d'étanchéité (15), de préférence un joint torique (15), est ménagé au-dessus du col (4) et/ou de l'élément de rappel (11, 11a, 11b), lequel élément d'étanchéité obture l'élément de raccordement de vanne (2) contre l'élément de vanne (3).

12. Dispositif selon les revendications 9 et 11 ou 10 et 11, **caractérisé en ce que** l'élément d'étanchéité (15) est disposé sur un second segment (3b) séparé de l'élément de vanne (3).

13. Dispositif selon l'une quelconque des revendications précédentes, **caractérisé en ce qu'**aucun élément d'étanchéité séparé n'est ménagé dans et entre la partie de la section de pression (10) et la zone partielle (9a) de la paroi (9).

14. Dispositif selon l'une quelconque des revendications précédentes, **caractérisé en ce qu'**au-dessus du col (4) est ménagé un raccord vissé (16, 16a, 16b) entre l'élément de vanne (3, 3a, 3b) et l'élément de raccordement de vanne (2).

15. Dispositif selon l'une quelconque des revendications précédentes, **caractérisé en ce que** la zone partielle (9a) de la paroi (9) présente au moins une régularité de surface définie.

16. Dispositif selon l'une quelconque des revendications précédentes, **caractérisé en ce que** le réservoir de fluide (1) est entouré par une couche de renforcement (17) de préférence enroulée ou tressée.

17. Dispositif de transformation de combustible en énergie, comprenant
- une unité de piles à combustible (40)
- au moins une conduite de raccordement de fluide (41)
- au moins un réducteur de pression (42) et
- au moins un dispositif (43) selon l'une quelconque des revendications précédentes 1 à 16,
la conduite de raccordement de fluide (41) reliant le dispositif (43) à l'unité de piles à combustible (4) en guidant le fluide, et le réducteur de pression (42), en direction du flux du fluide, étant disposé en amont de l'unité de piles à combustible (40).

18. Véhicule automobile comprenant un dispositif selon l'une quelconque des revendications précédentes 1 à 16 ou comprenant un dispositif de transformation de combustible en énergie selon la revendication 17.

19. Procédé de montage d'un dispositif de stockage et de distribution de fluides liquides et/ou gazeux sous pression selon l'une quelconque des revendications 1 à 16, comprenant les étapes suivantes :
- fourniture d'un réservoir de fluide (1) fabriqué selon un procédé de façonnage, de préférence un procédé de moulage par soufflage,
- agencement de l'élément de raccordement de vanne (2) sur le réservoir de fluide (1),
- montage de l'élément de vanne (3, 3a), le col (4) et l'élément de rappel (11, 11a, 11b) étant pressés en commun entre la zone partielle (9a) de la paroi (9) et la section de pression (10),
- poursuite du montage de l'élément de vanne (3, 3a, 3b) jusqu'à ce que la pression commune du col (4) et de l'élément de rappel (11, 11a, 11b) ait conduit à une déformation (X) de l'élément de rappel (11, 11a, 11b) qui soit supérieure à la déformation de fluage (Y) maximale du col (4) pendant la durée d'utilisation du dispositif,
de sorte que la déformation de fluage (Y) du col (4) est compensée par l'intermédiaire de l'élément de rappel (11, 11a, 11b) et qu'un siège de pression durable est obtenu entre la section de pression (10), le col (4), l'élément de rappel (11, 11a, 11b) et la zone partielle (9a) de la paroi (9),
**caractérisé en ce que**
l'élément de rappel (11a) et le col (4) sont réalisés en forme de douille et sont emboîtés l'un dans l'autre ou enfoncés l'un sur l'autre, et **en ce que** la section de pression (10) est entourée par l'élément de rappel (11a) et le col (4), le diamètre extérieur (D) de la section de pression (10), avant le montage de l'élément de vanne (3, 3a), étant supérieur au diamètre intérieur (d) du col (4) et/ou de l'élément de rappel (11a).
